# EUROPÄISCHE PATENTSCHRIFT

(11) **EP 0 567 940 B1**
(45) Veröffentlichungstag und Bekanntmachung des Hinweises auf die Patenterteilung: **29.12.1997**
(21) Anmeldenummer: 93106590.8
(22) Anmeldetag: 22.04.1993
(51) Int. Cl.: C09D 4/00, C09D 4/06, C08F 299/02

(54) **Härtbare Mischung für die Herstellung einer hochabriebfesten Beschichtung**
Curable mixture for the preparation of a highly abrasion resistant coating
Mélange durcissable pour la préparation d'un revêtement très résistant à l'abrasion

(30) Priorität: 29.04.1992 DE 4213999
(43) Veröffentlichungstag der Anmeldung: 03.11.1993
(73) Patentinhaber: Kramer, Jürgen, Dr., 21224 Rosengarten (DE)
(72) Erfinder: Kramer, Jürgen Dr, D- 2107 Rosengarten (DE); Kranz, Udo, D- 4780 Lippstadt (DE)

(56) Entgegenhaltungen:
- EP-A- 0 129 191
- EP-A- 0 330 115
- DE-A- 3 332 004

## Beschreibung

Die Erfindung bezieht sich auf durch Strahlung, insbesondere Elektronenstrahlung härtbare Mischungen für die Herstellung einer hochabriebfesten Beschichtung nach den Oberbegriffen der Ansprüche 1 und 4. Weiterhin sollen eine Verwendung einer solchen härtbaren Mischung beschrieben werden.

Zur optischen Aufwertung verschiedener Oberflächen werden diese mit insbesondere farbigen Beschichtungen versehen. Diese Beschichtungen sind dann jedoch nicht nur dem Auge sondern auch mechanischen Beanspruchungen ausgesetzt. Es ist darum notwendig, die Beschichtungen so zu gestalten, daß keine mechanischen Überbeanspruchungen auftreten. Dies stellt vor allem hohe Anforderungen an die Abriebfestigkeit der Beschichtungen.

Bekannte hochabriebfeste Beschichtungen basieren auf melamingetränkten Papieren, die einseitig mit in das Melamin eingelagerten, hochabriebfesten Materialien verstärkt sind. Die Papiere werden auf die zu dekorierenden Oberflächen aufgebracht oder beispielsweise bei der Herstellung von beschichteten Spanplatten direkt mit einer Masse aus Spänen und Bindemittel heiß verpreßt. Die Abriebfestigkeit von Beschichtungen wird in Taber-Umdrehungen angegeben. Beispielsweise bedeutet eine Abriebfestigkeit von 1.000 Taber-Umdrehungen, daß die Beschichtung erst nach über 1.000 Umdrehungen eines Test-Tabers eines sogenannten "Taber Abrasors" an den ersten Stellen von der beschichteten Oberfläche entfernt wird. Die bekannten auf mit Melaminharz getränkten Papieren basierenden Beschichtungen weisen je nach dem Anteil des hochabriebfesten Materials Abriebfestigkeiten bis zu 5.000 Taber-Umdrehungen auf. Dieser sehr hohe Wert geht jedoch zu Lasten der optischen Qualität der Beschichtung. Bei guter optischer Qualität sind nur Abriebfestigkeiten von einigen 100 Taber-Umdrehungen zu erreichen. Hauptnachteil der bekannten Beschichtungen auf der Basis von Papier ist deren aufwendige Handhabung beim Aufbringen auf die zu beschichtenden Oberflächen. Hinzu kommen nicht unerhebliche Kosten für die separate Herstellung der Beschichtung unabhängig von der Oberfläche.

Aus der EP-A-0 330 115 ist eine härtbare Mischung mit den Merkmalen der Oberbegriffe der Ansprüche 1 und 4 bekannt. Die beschriebene härtbare Mischung ist als Klebstoff für die Befestigung von elektronischen Bauteilen auf der Oberfläche eines gedruckten Schaltkreises vorgesehen. Anorganische Zähelastifizierer in der bekannten Mischung dienen dazu, die Haftkraft des Klebstoffs auch bei thermischer Belastung zu erhalten.

Eine härtbare Mischung mit den Merkmalen der Oberbegriffe der Ansprüche 1 und 4 ist ebenso aus der DE-A-33 32 004 bekannt. Hierbei handelt es sich um einen mit UV-Strahlung härtbaren Lack, der anorganische oder organische Zähelastifizierer in Form üblicher Füllstoffe für Lacke aufweist.

Eine härtbare Mischung ist auch aus der EP-C-0 014 901 bekannt. In deren Beispiel 2 wird eine Kunststoffbeschichtung aus aliphatischem Urethanacrylat und Hexandioldiacrylat beschrieben. Das Urethanacrylat macht 42,5 Gewichts-% der Mischung aus und ist unter dem Handelsnamen Ebecryl 264 der Firma UCB S.A. erhältlich. Das Hexandioldiacrylat macht 57,5 Gewichts-% aus und ist ein Reaktivverdünner für das Urethanacrylat. Die Kunststoffbeschichtung wird lösungsmittelfrei aufgetragen und durch Elektronenstrahlung gehärtet. Dabei entsteht eine für Kunststoffoberflächen außergewöhnliche Kratzfestigkeit und Härte. Die Abriebfestigkeit der Kunststoffbeschichtung bleibt jedoch mit einigen 100 Taber-Umdrehungen weit unter dem Wert zurück, der beispielsweise für Arbeitsplatten oder im Fußbodenbereich benötigt wird. Andererseits ist die bekannte Kunststoffbeschichtung zur Aufnahme eines Bildes geeignet. Hierzu wird sie mit einem Transferdruckträger in Kontakt gebracht und für kurze Zeit erhitzt. Diese Eigenschaft der Kunststoffbeschichtung erlaubt den Verzicht auf ein Papier als eigentlichen Dekorträger. Hierdurch wird das Aufbringen der Beschichtung auf die zu dekorierende Oberfläche erleichtert.

Neben der Härtung von Mischungen aus niedermolekularen Polymeren durch Elektronenstrahlung sind auch Härteverfahren bekannt, bei denen Infrarot- oder UV-Strahlung Verwendung findet.

Der Erfindung liegt die Aufgabe zugrunde eine härtbare Mischung der eingangs beschriebenen Art aufzuzeigen, die leicht zu handhaben ist und dennoch hervorragende Abriebswerte aufweist.

Erfindungsgemäß wird dies bei härtbaren Mischungen durch die Merkmale der Ansprüche 1 und 4 erreicht. Die in einer mikromorphologischen Struktur fein verteilt nebeneinander vorliegenden Mikrophasen führen im wesentlichen dazu, daß sich Beschädigungen der Beschichtung in der Beschichtung nicht ungehindert fortpflanzen können. Die unterschiedlichen physikalischen Eigenschaften der einzelnen Mikrophasen verhindern beispielsweise das Durchlaufen von Rissen, welche den Abrieb durch das Losbrechen größerer Partikel aus der Beschichtung stark beschleunigen. Die Bereiche der verschiedenen Mikrophasen in dem Phasengemisch sind jeweils verhältnismäßig klein. Es ist nicht von einer Matrix mit eingelagerten Materialien sondern statt dessen von einer zweiphasigen, mikromorphologischen Struktur zu sprechen. Entsprechend beruhen die Eigenschaften der Beschichtung nicht auf denjenigen einer Mikrophase sondern auf den gemeinsamen Eigenschaften des Phasengemisches. Wenn die härtbare Mischung auch im ungehärteten Zustand zwei Phasen nebeneinander aufweist, so ist darauf zu achten, daß eine gute Durchmischung der Phasen vorliegt. Anderenfalls besteht die Gefahr, daß die einzelnen Phasen in der gehärteten Beschichtung nicht als Mikrophasen vorliegen, sondern große geschlossene Bereiche einnehmen, in denen sich Schädigungen der Beschichtung ungehindert fortpflanzen können.

Der Anteil der Acrylat-Oligomere beträgt zwischen 20 und 80 Gewichts-%, wobei der Anteil der Zähelastifizierer bis zu 50 Gewichts-% beträgt. Gleiche Anteile der verschiedenen Mikrophasen an der Beschichtung sind nicht Voraussetzung für die Auswirkungen der mikromorphologischen Struktur auf die Abriebfestigkeit der Beschichtung. Vielmehr können die Eigenschaften des Phasengemisches über einen weiten Bereich mit unterschiedlichen Einzelanteilen der Acrylat-Oligomere und der Zähelastifizierer genutzt werden.

Die Mischung kann weiterhin einen zusätzlichen Anteil aus Reaktivverdünnern aufweist, der bis zu 70 Gewichts-% beträgt. Reaktivverdünner sind vielfach notwendig, um die gewünschte Vernetzung der Acrylat-Oligomere bei der Härtung der Mischung sicherzustellen.

Vorteilhaft sind die Zähelastifizierer in ungehärtetem Zustand in den Acrylat-Oligomeren vollständig lösbar. Ein rasches Härten der Mischung, beispielsweise durch Elektronenstrahlung, ergibt so problemlos eine mikromorphologische Struktur der Beschichtung, bei der die verschiedenen Mikrophasen fein verteilt sind. Für die Ausbildung von größeren Bereichen der verschiedenen Phasen reicht ganz einfach die Zeit nicht. Außerdem erleichtert die vollständige Lösbarkeit der Zähelastifizierer in den Acrylat-Oligomeren die homogene Verteilung der einzelnen Anteile der Mischung, was seinerseits Voraussetzung für eine Beschichtung mit homogenem Aufbau, d. h. mit gleichmäßiger Phasenverteilung ist.

Die Acrylat-Oligomere können di- und/oder höherfunktionelle Acrylat-Oligomere aus der Gruppe der Epoxy-, Urethan- und Polyesteracrylate sein. Insbesondere sind Acrylat-Oligomere aus der Untergruppe der aliphatischen Polyesterurethanacrylate und/oder des Bisphenol-A-Epoxydiacrylates geeignet.

Die Reaktivverdünner können alkoxylierte, trifunktionelle Monomere des Pentaerythritols (PETA), des Trimethylolpropans (TMPTA) und/oder des Glycerols (GPTA) sein.

Die Zähelastifizierer können harte, anorganische Zuschlagstoffe sein (Anspruch 4). In diesem Fall wird die Abriebfestigkeit der Beschichtung neben der mikromorphologischen Struktur, auch durch die Härte der Zuschlagstoffe bestimmt. Den harten, anorganischen Zuschlagstoffen kommt bei der neuen Erfindung also eine Doppelfunktion zu. Geeignete anorganische Zuschlagstoffe sind beispielsweise natürlich vorkommende Gemische von Aluminiumoxyd, Siliziumdioxyd, Eisen-III-Oxyd, Titanoxyd, Calziumoxyd und/oder Natriumoxyd.

Die Zähelastifizierer können aber auch reaktive, flüssige Polymere sein (Anspruch 1). Diese Substanzen, die auch als RPL's (Reaktiv Liquid Polymers) bekannt sind, weisen keine eigene hohe Abriebfestigkeit auf. Durch ihren Zusatz wird die Beschichtung ausschl. aufgrund der entstehenden mikromorphologischen Struktur abriebfest. Besonders geeignete reaktive, flüssige Polymere sind flüssige vinyl- oder acrylgruppenterminierte Nitril-, Butadien- und/oder Silikonkautschuke.

Neben den Acrylat-Oligomeren, den Reaktivverdünnern und den Zähelastifizierern können der Mischung Verlaufsmittel, Benetzungsmittel, Mattierungsmittel, Fotoinitiatoren und/oder Farbpigmente in einem Anteil bis zu fünf Gewichts-% zugesetzt sein. Mit diesen Hilfsstoffen sind andere Eigenschaften der Beschichtung neben der Abriebfestigkeit einstellbar. Die Beschichtung ist grundsätzlich auch für die Bildübertragung mittels Transferdruckträgern geeignet. Die Mikrophasen führen nicht zu einer sich bei der Bildübertragung auswirkenden Aufteilung der Beschichtung in Bereiche mit unterschiedlichen Diffusionskoeffizienten.

Bei der erfindungsgemäßen Verwendung der härtbaren Mischung bei der Herstellung einer hochabriebfesten Beschichtung auf einer Oberfläche nach Anspruch 10 wird die Mischung durch Sprühen, Gießen oder Walzen auf die Oberfläche aufgetragen und anschließend durch Strahlung, insbesondere Elektronenstrahlung gehärtet. Das Aufbringen der Mischung auf die Oberfläche erfordert im Vergleich zu dem Einsatz von mit Melamin getränkten Papieren nur einen geringen Aufwand. Die Mischung läßt sich beispielsweise einfach auf die Oberflächen aufsprühen. Hierdurch entsteht auch eine gute Verbindung der Beschichtung mit der Oberfläche.

Wie bereits erläutert besteht der wesentliche Unterschied der erfindungsgemäßen mikromorphologischen Struktur zu in eine Matrix eingebetteten abriebfesten Materialien darin, daß die mikromorphologische Struktur die Eigenschaften der gesamten Beschichtung ändert. So ist die gesamte Beschichtung und nicht nur der Anteil der abriebfesten Materialien für die guten Abriebeigenschaften verantwortlich. Außerdem macht sich die mikromorphologische Struktur wegen ihrer feinen Aufteilung optisch so gut wie nicht bemerkbar. Die neue Beschichtung bietet also nicht nur in technischer Hinsicht Vorteile.

Die Erfindung wird im Folgenden anhand eines Ausführungsbeispiels näher erläutert:

Aus 60 Gewichts-% Oligotriacrylat, 25 Gewichts-% Bisphenol-A-Epoxydiacrylat und 15 Gewichts-% mineralischen Zähelastifizierern wurde eine härtbare Mischung hergestellt. Die Härtung der auf eine Oberfläche aufgesprühten Mischung erfolgte durch Elektronenstrahlung. Die Schichtstärke der resultierenden Beschichtung betrug 80 µm. Die Abriebfestigkeit der Beschichtung wurde zu 4.000 bis 5.000 Taber-Umdrehungen (Taber Test CS 42 / 500g Rollen nach DIN 53799) bestimmt.

Eine zum Vergleich ohne mineralische, d. h. harte, anorganische Zähelastifizierer erstellte Mischung wies 66 Gewichts-% Oligotriacrylat und 34 Gewichts-% Bisphenol-A-Epoxydiacrylat auf. Die entsprechende, ebenfalls durch Elektronenstrahlung gehärtete Beschichtung zeigte bei 80 µm Schichtstärke eine Abriebfestigkeit von nur 300 bis 400 Taber-Umdrehungen. Der erfindungsgemäße Zuschlag von mineralischen Zähelastifizierern reicht als solcher nicht aus, den Anstieg in der Abriebfestigkeit zu erklären. Dieser beruht im wesentlichen auf der Ausbildung einer mikromorphologischen Struktur in der erfindungsgemäßen Beschichtung. Hierbei bildet der mineralische Zähelastifizierer eine separate Mikrophase.

## Patentansprüche

1. Durch Strahlung, insbesondere Elektronenstrahlung härtbare Mischung für die Herstellung einer hochabriebfesten Beschichtung, mit einem Anteil aus Acrylat-Oligomeren, wobei der Mischung gegebenenfalls Reaktivverdünner in einem Anteil bis zu 70 Gewichts-% und Verlaufsmittel, Benetzungsmittel, Mattierungsmittel, Photoinitiatoren und/oder Farbpigmente in einem Anteil bis zu 5 Gewichts-% zugesetzt sind, wobei die Mischung einen weiteren Anteil aus in gehärtetem Zustand in den Acrylat-Oligomeren zumindest nicht vollständig lösbaren Zäheelastifizierern aufweist und wobei der Anteil der Acrylat-Oligomere zwischen 20 und 80 Gewichts-% und der Anteil der Zäheelastifizierer bis zu 50 Gewichts-% beträgt, so daß nach dem Härten der Mischung mindestens zwei verschiedene, fein verteilte Mikrophasen mit unterschiedlichen physikalischen Eigenschaften nebeneinander in der Beschichtung vorliegen, dadurch gekennzeichnet, daß die Zäheelastifizierer reaktive, flüssige Polymere, sogenannte RPL's (Reaktiv Liquid Polymers) sind.

2. Härtbare Mischung nach Anspruch 1, dadurch gekennzeichnet, daß die reaktiven, flüssigen Polymere in ungehärtetem Zustand der Mischung in den Acrylat-Oligomeren vollständig lösbar sind.

3. Härtbare Mischung nach Anspruch 1, dadurch gekennzeichnet, daß die reaktiven, flüssigen Polymere flüssige vinyl- oder acrylgruppenterminierte Nitril-, Butadien- und/oder Silikonkautschuke sind.

4. Durch Strahlung, insbesondere Elektronenstrahlung härtbare Mischung für die Herstellung einer hochabriebfesten Beschichtung, nit einen Anteil aus Acrylat-Oligomeren, wobei der Mischung gegebenenfalls Reaktivverdünner in einem Anteil bis zu 70 Gewichts-% und Verlaufsmittel, Benetzungsmittel, Mattierungsmittel, Photoinitiatoren und/oder Farbpigmente in einen Anteil bis zu 5 Gewichts-% zugesetzt sind, wobei die Mischung einen weiteren Anteil aus in gehärtetem Zustand in den Acrylat-Oligomeren zumindest nicht vollständig lösbaren Zäheelastifizierern aufweist und wobei der Anteil der Acrylat-Oligomere zwischen 20 und 80 Gewichts-% und der Anteil der Zäheelastifizierer bis zu 50 Gewichts-% beträgt, so daß nach dem Härten der Mischung mindestens zwei verschiedene, fein verteilte Mikrophasen mit unterschiedlichen physikalischen Eigenschaften nebeneinander in der Beschichtung vorliegen, dadurch gekennzeichnet, daß die Zäheelastifizierer solche harten, anorganischen, d. h. mineralische Zuschlagstoffe sind, daß nach dem Härten der Mischung eine Abriebfestigkeit von 4.000-5.000 Taber-Umdrehungen (Taber Test CS 42 / 500 g Rollen nach DIN 53799) bei einer Schichtdicke von 80 µm aufweist.

5. Härtbare Mischung nach Anspruch 1, dadurch gekennzeichnet, daß die Zuschlagstoffe Aluminiunoxid aufweisen.

6. Härtbare Mischung nach Anspruch 1, dadurch gekennzeichnet, daß die Zuschlagstoffe ein natürlich vorkommendes Gemisch aus Aluminiumoxid, Siliziumdioxid, Eisen-III-oxid, Titanoxid, Calciumoxid und/oder Natriummonoxid aufweisen.

7. Härtbare Mischung nach Anspruch 1 oder 4, dadurch gekennzeichnet, daß die Acrylat-Oligomere di- und/oder höherfunktionelle Acrylat-Oligomere aus der Gruppe der Epoxy-, Urethan- und Polyesteracrylate sind.

8. Härtbare Mischung nach Anspruch 7, dadurch gekennzeichnet, daß die Acrylat-Oligomeren aus der Untergruppe der aliphatischen Polyesterurethanacrylate und/oder des Bisphenol-A-Epoxydiacrylates stammen.

9. Härtbare Mischung nach Anspruch 1, dadurch gekennzeichnet, daß die Reaktivverdünner alkoxylierte, trifunktionelle Monomere des Pentaerythritols (PETA), des Trimethylolpropans (TMPTA) und/oder des Glycerols (GPTA) sind.

10. Verwendung der Mischung gemäß einem der voranstehenden Ansprüche 1 bis 9 in einem Verfahren zur Herstellung einer hochabriebfesten Beschichtung auf einer Oberfläche, wobei die Mischung durch Sprühen, Gießen oder Walzen auf die Oberfläche aufgetragen und anschließend durch Strahlung, insbesondere Elektronenstrahlung gehärtet wird und die Beschichtung eine mikromorphologische Struktur aus mindestens zwei verschiedenen Mikrophasen mit unterschiedlichen physikalischen Eigenschaften aufweist, wobei eine Mikrophase im wesentlichen aus vernetzten Acrylat-Oligomeren besteht.

## Claims

1. Radiation curable mixture, especially for electron beam curing, for the preparation of a highly abrasion resistant coating, with a part of acrylic oligomers, whereby the mixture contains up to 70 parts by weight of acrylic oligomers and reactive diluent and spreading agent, wetting agent, matting agent photoinitiators and/or colouring pigments up to 5 parts by weight (pbw), whereby the mixture contains an additional part of toughening elastifiers, which in cured state are not completely soluble in the acrylic oligomers and whereby the acrylic oligomers are contained from 20 to 80 parts per weight and the toughening elastifiers up to 50 pbw, thus after curing the coating contains minimum two different fine dispersed micro phases with different physical properties, characterised with the toughening elastifiers being reactive liquid polymers (RLPs).

2. Curable mixture of claim 1, characterised through the fact that the uncured reactive liquid polymers are completely soluble in the acrylic oligomers.

3. Curable mixture of claim 1, characterised through the reactive liquid polymers being vinyl- or acrylic-groups terminated nitril- , butadiene- and/or silicon rubbers.

4. Radiation curable mixture, especially for electron beam curing, for the preparation of a highly abrasion resistant coating, with a part of acrylic oligomers, whereby the mixture contains up to 70 parts by weight of acrylic oligomers and reactive diluent and spreading agent, wetting agent, matting agent photoinitiators and/or colouring pigments up to 5 parts by weight (pbw), whereby the mixture contains an additional part of toughening elastifiers, which in cured state are not completely soluble in the acyclic oligomers and whereby the acrylic oligomers are contained from 20 to 80 parts per weight and the toughening elastifiers up to 50 pbw, thus after curing the coating contains minimum two different fine dispersed micro phases with different physical properties, characterised through the toughening modifiers are such hard, inorganic, i.e. mineral admixtures, that after curing the coating gives an abrasion resistance of 4-5000 turns in the taber abraser CS 42 / 500g rolls test after DIN 53799 with a thickness of 80µm.

5. Curable mixture of claim 1, characterised through containing aluminium oxide in the admixture .

6. Curable mixture of claim 1, characterised through the admixtures containing a naturally occurring mixture of aluminium oxide, silica oxide, ferrous-III-oxide, titanium oxide, calcium oxide and/or sodium oxide.

7. Curable mixture of claim 1 to 4 , characterised in that the acrylic oligomers are di- and/or higher functional acrylic oligomers of the group of epoxy-, urethane- and polyester-acrylics.

8. Curable mixture of claim7, characterised through the acrylic oligomers being of the subgroup of aliphatic polyester-acrylics, and/or Bispenol-A-Epoxydiacrylates.

9. Curable mixture of claim 1, characterised through the reactive diluent being alkoxylated, tri-functional monomers of pentaerythriol (PETA), tri-methylol-propane (TMPTA) and/or glycerol (GPTA )

10. Application of the mixture of one of the claims I to 9 in a process of preparing a highly abrasion resistant coating on a surface, whereby the mixture is applied via spraying, casting or rolling to the surface and afterwards cured via radiation, especially electron beam curing and the coating contains a micro morphological structure of minimum two different micro phases with different physical properties, whereby one micro phase consists of cured acrylic oligomers.

## Revendications

1. Mélange durcissable par radiation, particulièrement par rayon électronique peur la préparation d'un revêtement très résistant a l'abrasion contenant des oligomères d'acrylat auquel on ajoute le cas échéant un diluent réactive jusqu'à 70 % du poids et des agents pour étendre, mouiller, et matir, ,, photoinitiators" et/ou colorants jusqu'à 5 % du poids et en même temps le mélange contient en plus dans les oligomères d'acrylat des agents de ténacité élastique a l'état dur, toutefois pas complètement insolubles. On a alors entre 20 et 80 % du poids en oligomères d'acrylat et jusqu'à 50% au poids en agents de ténacité élastique, de telle sorte qu'après le durcissement du mélange on a au moins deux ,,Microphases" différentes, dispersées finement, avec des propriétés physique différentes côte à côte dans le revêtement, caractérisées par le fait que les agents de la ténacité élastique sont des polymères réactifs et liquides appelés RLPs (Reactive Liquid Polymers).

2. Mélange durcissable selon revendication 1, caractérise par le fait que les polymères réactives et liquides non durci, sont complètement soluble dans les oligomères d'acrylat.

3. Mélange durcissable selon revendication 1, caractérise par le fait que les polymères réactives et liquides sont des caoutchoucs de vinyl- ou du groupe acryl-terminé, des nitrils, des butadienes et/ou silicone.

4. Mélange durcissable par radiation, particulièrement par rayon électronique pour la préparation d'un revêtement très résistant a l'abrasion contenant des oligomères d'acrylat auquel on ajoute le cas échéant un diluent réactive jusqu'à 70 % du poids et des agents pour étendre, mouiller, et matir, "photoinitiators" et/ou colorants jusqu'à 5 % du poids et en même temps le mélange contient en plus dans les oligomères d'acrylat des agents de ténacité élastique a l'état dur, toutefois pas complètement insolubles. On a alors entre 20 et 80 % du poids en oligomères d'acrylat et jusqu'à 50% au poids en agents de ténacité élastique, de telle sorte qu'après le durcissement du mélange on a au moins deux "Microphases" différentes, dispersées finement, avec des propriétés physique différentes côte à côte dans le revêtement, caractérisées par le fait que les agents de la ténacité élastique sont de tels agents de remplissage, durs et inorganiques, c'est à dire minéraux qu'après le durcissement du mélange on obtient un revêtement de 80µm d'épaisseur dont la résistance à l'abrasion est de 4-5000 cycles (Test Taber CS 42/ rouleaux de 500 g selon DIN 53799).

5. Mélange durcissable selon revendication 1, caractérise par le fait que les agents de remplissages contiennent des oxydes d'aluminium.

6. Mélange durcissable selon revendication 1, caractérise par le fait que les agents de remplissage contiennent un mélange naturel d'oxydes aluminium, d'oxydes silicium, d'oxydes du fer-III, d'oxydes du titane, oxydes du calcium et/ou oxydes du sodium.

7. Mélange durcissable selon revendication 1, caractérise par le fait que les oligomères d'acrylat sont di-. et/ou plus- fonctionnelles oligomères d'acrylat de la groupe des epoxy-, urethane- et polyester- acrylates.

8. Mélange durcissable selon revendication 7, caractérise par le fait que les oligomères d'acrylat sont de la sous-groupe des acrylates aliphatique polyester et/ou du Bisphenol-A-Epoxydiacrylate.

9. Mélange durcissable selon revendication 1, caractérise par le fait que les oligomères d'acrylat sont des monomères tri-fonctionnelles alkoxyle, du pentaerythritol (PETA), du tri - methylol - propane (TMPTA) et/ou du glycérol (GPTA).

10. Application du mélange selon les revendications 1-9 a un procédé au cours duquel la préparation d'un revêtement très résistant a l'abrasion sur une surface ou le mélange est applique en aspergeant, en versant, étant au rouleau, et ensuite est durcie par radiation, particulièrement par rayon électronique et le revêtement présents une structure micro morphologique d'un minimum de deux micro phases avec différentes propriétés physique pour cela micro phase se compose essentiellement des oligomères d'acrylat durcies.
